Europäisches Patentamt

(19) European Patent Office

Office européen des brevets

(11) Numéro de publication : **0 162 767**
**B1**

(12) FASCICULE DE BREVET EUROPÉEN

(45) Date de publication du fascicule du brevet :
20.09.89

(21) Numéro de dépôt : 85400841.4

(22) Date de dépôt : 29.04.85

(51) Int. Cl.⁴ : **G 01 V   1/145**, **G 01 V   1/40**

(54) Dispositif pour appliquer des contraintes radiales impulsionnelles à la paroi d'un puits.

(30) Priorité : 02.05.84 FR 8406922

(43) Date de publication de la demande :
27.11.85 Bulletin 85/48

(45) Mention de la délivrance du brevet :
20.09.89 Bulletin 89/38

(84) Etats contractants désignés :
DE GB IT NL

(56) Documents cités :
US—A— 3 221 833
US—A— 3 718 205
US—A— 4 252 210

(73) Titulaire : **INSTITUT FRANCAIS DU PETROLE**
**4, Avenue de Bois-Préau**
**F-92502 Rueil-Malmaison (FR)**

(72) Inventeur : **Dedole, Pascal**
**12, boulevard Léon Louesse**
**F-92500 Rueil Malmaison (FR)**

EP 0 162 767 B1

Jouve, 18, rue St-Denis, 75001 Paris, France

## Description

La présente invention a pour objet un dispositif pour appliquer des contraintes radiales impulsionnelles à la paroi d'un puits et plus particulièrement un dispositif d'émission adapté à être descendu à une certaine profondeur dans un puits foré dans le sol, pour engendrer des impulsions sismiques.

Une source d'impulsions pour puits présente un certain nombre d'avantages. On peut, en utilisant une telle source, effectuer des opérations de prospection sismique, de puits à puits qui permettent d'obtenir un pouvoir de résolution élevé ou encore restituer rapidement des profils sismiques obliques en captant les ondes émises au moyen d'une pluralité de récepteurs disposés en surface.

Elle est en outre plus efficace qu'une source disposée à la surface. Une partie notable de l'énergie acoustique produite par celle-ci est en effet émise sous la forme d'ondes de surface ou d'ondes de Rayleigh inexploitables et la partie de cette énergie qui est émise sous la forme d'ondes de type P ou S, est atténuée considérablement par la couche superficielle ou couche altérée (W. Z). Le rendement énergétique en onde P ou S d'une source de puits émettant sous la couche altérée est de ce fait beaucoup plus élevée.

Plusieurs types de source peuvent être employés pour engendrer des ondes sismiques dans des puits ou forages. Les sources à explosifs solides ou à mélanges gazeux explosifs produisent des impulsions très puissantes mais généralement les explosions ont pour effet d'altérer ou d'endommager les parois du puits si bien que la répétition ultérieure des tirs sismiques aux mêmes emplacements est difficile. Des sources à explosifs sont décrites par exemple dans les brevets US N° 3408622, 3858167 ou 3408622.

Des impulsions sismiques peuvent aussi être engendrées par des sources du type canon à air au moyen de brusques décharges d'air imprimé à l'intérieur du puits rempli d'eau. De telles sources produisent des ondes acoustiques puissantes mais nécessitent pour leur fonctionnement l'utilisation d'un compresseur ou de réservoirs de fluide comprimé qui, du fait de l'exiguïté du trou foré, doivent être installés en surface et reliés à la source par des tuyauteries. Une telle source est décrite par exemple dans le brevet français 2.311.322.

Par les brevets US N° 3718205 et 4252210, on connaît aussi des vibrateurs hydrauliques adaptés à fonctionner dans des puits ou forages. Ces vibrateurs comportent un corps rigide associé à au moins une enceinte déformable qui peut être expansée de manière à venir s'appliquer contre la paroi du puits à la profondeur du fonctionnement choisi. Un système hydraulique comporte un élément pouvant coulisser dans le corps, des moyens pour fournir un fluide sous pression et des moyens de distribution pour appliquer le fluide à l'élément coulissant, de manière à provoquer un déplacement alternatif de celui-ci et une variation concomittante de la pression à l'intérieur de l'enceinte dilatée.

Le dispositif selon l'invention, tel qu'il est défini par la revendication 7, est bien adapté à transmettre des impulsions sismiques puissantes et brèves aux formations géologiques traversées par des puits même relativement étroits. Le dispositif étant contenu dans un corps qui est relié à une installation de surface par un câble unique assurant sa suspension, son alimentation électrique et sa commande, est adapté à fonctionner jusqu'à des profondeurs très importantes où règnent des pressions et des températures élevées. Ces surpressions permettant l'ancrage des patins contre les parois du puits et l'application de surpressions hydrauliques brèves, étant maintenues constantes quelle que soit la pression statique régnant dans les puits aux emplacements de fonctionnement, assurent au dispositif une bonne régularité de fonctionnement dans toute la gamme de profondeur où on l'utilise. L'emploi de longs patins d'ancrage contribue à rendre plus homogène la transmission aux parois des impacts créés.

D'autres caractéristiques et avantages du dispositif selon l'invention apparaîtront à la lecture de la description ci-après d'un mode de réalisation préféré mais non limitatif, en se reportant aux dessins annexés sur lesquels :

la figure 1 montre une vue schématique partielle du corps du dispositif ancré par application contre la paroi d'un puits de patins d'ancrage (un seul est représenté) sous l'action de vérins ;

la figure 2 représente schématiquement en vue de dessus le corps ancré dans un puits par trois patins disposés à 120° les uns par rapport aux autres ;

la figure 3 représente de façon synoptique, le système hydraulique permettant de déplacer les patins et de leur appliquer des impulsions radiales, les électro-vannes que comportent ce système étant positionnées pour que les patins soient maintenus en position de retrait ;

la figure 4 représente le même système, où les électro-vannes sont positionnées pour l'ancrage des patins contre les parois du puits ; et

la figure 5 représente le même système, les électro-vannes étant positionnées pour qu'une contrainte radiale soit appliquée aux patins déjà ancrés.

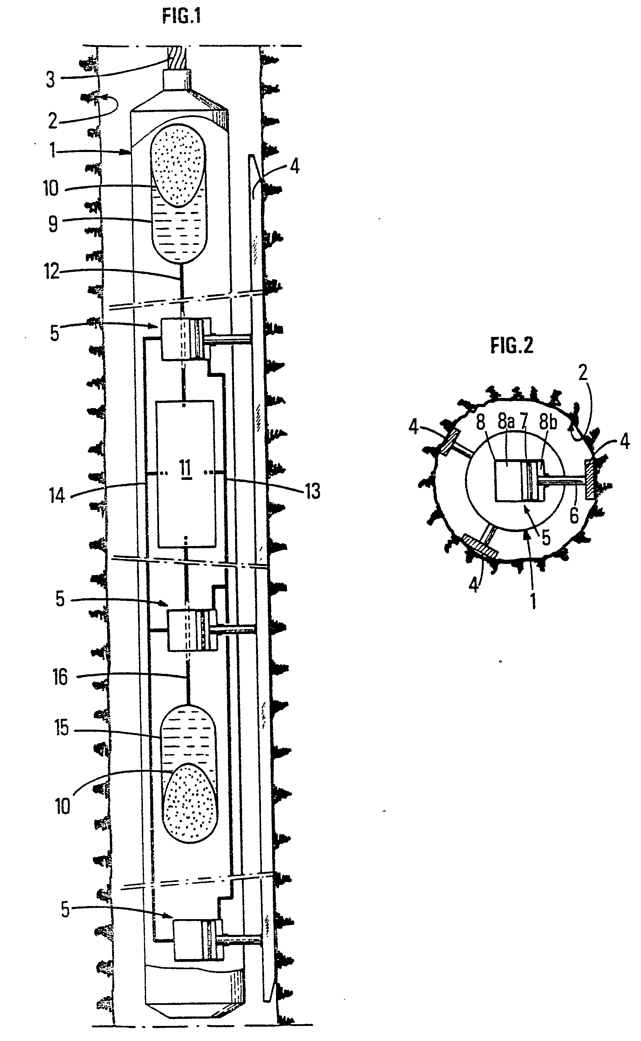

Si l'on se reporte à la figure 1, on voit que le dispositif comporte un corps 1 qui peut être descendu dans un puits ou forage 2 à l'extrémité d'un câble multi-fonctions 3 adapté à soutenir la sonde et comprenant des conducteurs d'alimentation électrique et des conducteurs permettant la transmission de signaux de commande depuis une installation de surface jusqu'à la sonde et en retour, la transmission jusqu'à la surface de signaux de mesure engendrés par des appareils de mesure.

Le corps 1 est associé à trois patins 4 (Fig. 2) disposés de préférence à 120° les uns des autres, qui peuvent être déplacés d'une position de retrait permettant les libres déplacements de la sonde dans le puits, à une position d'écartement où ils sont appliqués contre la paroi du puits, sous l'action de vérins 5.

Chaque patin d'ancrage est associé par exemple à trois vérins disposés radialement et comportant chacun une tige 6 solidaire d'un piston 7 adapté à coulisser dans un cylindre 8 sous l'action d'un système hydraulique de manoeuvre.

Ce système comporte un accumulateur oléo-pneumatique 9 d'un type connu, comportant deux chambres remplies respectivement d'huile et d'air sous pression qui sont séparés par une membrane déformable 10. Il comporte aussi un ensemble de commande contenu dans un compartiment 11 et trois canalisations 12, 13, 14 pour faire communiquer l'ensemble de commande respectivement avec la chambre remplie d'huile de l'accumulateur 9, avec les chambres 8b des cylindres 8 des vérins les plus proches des patins et avec les chambres 8a opposées desdits cylindres.

Un accumulateur analogue 15 est également disposé à l'intérieur du corps et connecté à l'ensemble de commande par une canalisation 16. Les accumulateurs 9 et 15 sont respectivement utilisés pour l'ancrage des patins et l'application d'impulsions aux patins ancrés, comme on le verra ci-après.

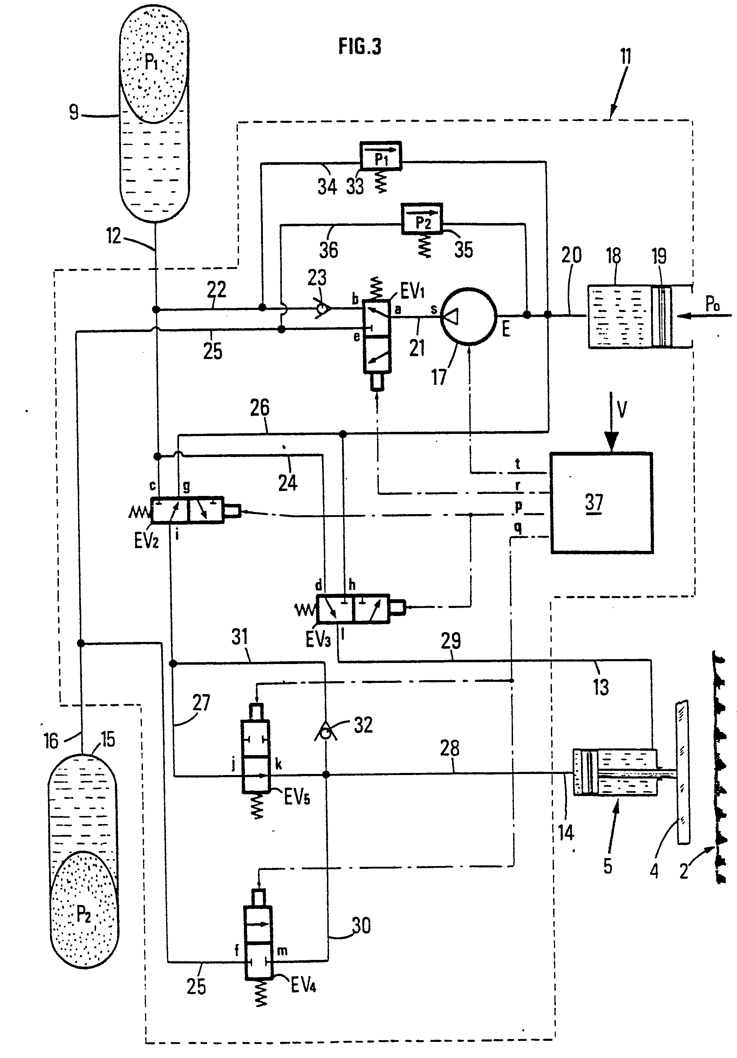

L'ensemble de commande contenu dans le compartiment 11 comporte (Figs 3, 4, 5) une pompe hydraulique 17, un cylindre 18 de compensation de pression statique fermé à une première extrémité et communiquant avec l'extérieur du corps de sonde à son extrémité opposée, à l'intérieur duquel coulisse librement un piston 19. La chambre du cylindre 18 du côté fermé de celui-ci, est remplie d'huile qui, en raison du libre coulissement du piston 19, est maintenue en permanence à la pression régnant dans le puits. Une canalisation 20 fait communiquer cette chambre avec l'entrée E de la pompe 17.

La sortie s de la pompe communique par une canalisation 21 avec une voie d'entrée a d'une première électro-vanne EV1 à trois voies. Une canalisation 22 sur laquelle est disposée une soupape anti-retour 23, fait communiquer une première sortie b de l'électro-vanne EV1 avec une des voies c d'une électro-vanne à trois voies EV2, avec une canalisation 12 venant de l'accumulateur 9 (Fig. 1) et avec une canalisation 24 connectée à une voie d d'une électro-vanne à trois voies EV3. La seconde voie de sortie e de l'électro-vanne EV1 est reliée à une voie f d'une quatrième électro-vanne EV4 à deux voies par une canalisation 25, à laquelle se raccorde la canalisation 16 venant de l'accumulateur 15.

Une seconde voie g de l'électro-vanne EV2 et une seconde voie h de l'électro-vanne EV3 communiquent par une canalisation 26 avec la canalisation 20, à l'entrée E de la pompe. Une canalisation 27 fait communiquer une troisième voie i de l'électro-vanne EV2 avec une voie j d'une électro-vanne à deux voies EV5, l'autre voie k de celle-ci communiquant par une canalisation 28 avec la canalisation 14 (Fig. 1) reliant les chambres 8a des vérins 5 les plus éloignées des patins 4. La canalisation 13 interconnectant les chambres opposées 8b de ces mêmes vérins, communique avec une canalisation 29 connectée à la troisième voie l de l'électro-vanne EV3.

La canalisation 28 est connectée à la seconde voie m de l'électrovanne EV4 par une canalisation 30 et à la canalisation 27 par une canalisation 31 sur laquelle est disposée une soupape anti-retour 32. Une première soupape tarée 33 disposée sur une canalisation 34 qui réunit les canalisations 22 et 20, permet de limiter l'écart entre la pression de charge P1 de l'accumulateur 9 et la pression statique extérieure P0, à une première valeur prédéterminée P1.

Une seconde soupape tarée 35 disposée sur une canalisation 36 réunissant les canalisations 25 et 20, permet de la même façon de limiter l'écart entre la pression de charge P2 de l'accumulateur 15 et la pression statique extérieure P0, à une seconde valeur prédéterminée ΔP2 supérieure à ΔP1. Les électro-vannes sont actionnées par des signaux électriques provenant d'un boîtier de commande 37.

Les électro-vannes EV2, EV3 sont actionnées simultanément depuis le boîtier par une ligne électrique p. De la même manière, une même ligne q issue du boîtier 37, permet d'actionner simultanément les électro-vannes EV4, EV5. L'électro-vanne EV1 est actionnée séparément par une ligne r provenant également du boîtier.

Le boîtier 37 est connecté à des moyens électriques (non représentés) d'entraînement de la pompe 17 par une ligne d'alimentation t. Une ligne V (non représentée) le connecte à des conducteurs électriques du câble multi-fonctions 2 (Fig. 1) supportant le corps 1.

L'accumulateur 9, les électro-vannes EV2, EV3 et les canalisations qui les relient à l'accumulateur et aux vérins d'ancrage 5, constituent les moyens d'ancrage. L'accumulateur auxiliaire 15, les électro-vannes EV4, EV5 et les canalisations reliant celles-ci à l'accumulateur 15 et à la chambre 8a des vérins d'ancrage, constituant les moyens d'application de contraintes radiales. L'ensemble de mise en pression des accumulateurs 9 et 15, constitué de la pompe 17, du cylindre 18 de compensation de pression statique, de l'électro-vanne EV1, des soupapes 33, 35 et des canalisations associées, est commun aux moyens d'ancrage et aux moyens d'application de contraintes radiales.

En position de repos, l'électro-vanne EV1 fait communiquer les canalisations 21 et 22, l'électro-vanne EV2 fait communiquer les canalisations 26 et 27, l'électro-vanne EV3 fait communiquer les canalisations 24 et 29, l'électro-vanne EV4 isole l'une de l'autre les canalisations 25 et 30 et enfin l'électro-vanne EV5 fait communiquer les canalisations 27 et 28.

La soupape anti-retour 23 est interposée sur la canalisation 22 pour interdire la décharge de l'accumulateur 9 dans la pompe 17, lorsque celle-ci est arrêtée. La soupape 32 empêche la décharge de l'accumulateur 15 dans l'accumulateur 9 par l'intermédiaire des canalisations 25, 30, 31 lorsque les électro-vannes EV2, EV4 et EV5 sont excitées.

Le système hydraulique est agencé pour que, en position de repos des électro-vannes, la chambre 8a de chaque vérin la plus éloignée de chaque patin soit maintenue à la pression P0 extérieure au corps 1, la pression dans la chambre opposée 8b qui est celle de l'accumulateur 9 étant supérieure à cette pression statique, de manière qu'aucune force d'ancrage ne s'exerce sur les patins.

Le dispositif fonctionne de la manière suivante :

les électro-vannes étant toutes en position de repos (Fig. 3), le dispositif est descendu dans le puits 2 depuis la surface jusqu'à la profondeur de fonctionnement choisi ou déplacé jusqu'à celle-ci depuis une position de travail antérieure.

On commande la mise en fonctionnement de la pompe 17 et on charge l'accumulateur 9 jusqu'à la pression prédéterminée $P1 = P0 + \Delta P1$ fixée par l'élément de limitation (soupape tarée) 33, puis on actionne l'électro-vanne EV1 de manière à mettre en communication les voies a et e de celle-ci. Le fluide sous pression délivré par la pompe 17 est alors utilisé pour gonfler l'accumulateur 15 jusqu'à la pression prédéterminée $P2 = P0 + \Delta P2$ fixée par la soupape tarée 35. Les accumulateurs étant chargés, la pompe est alors arrêtée.

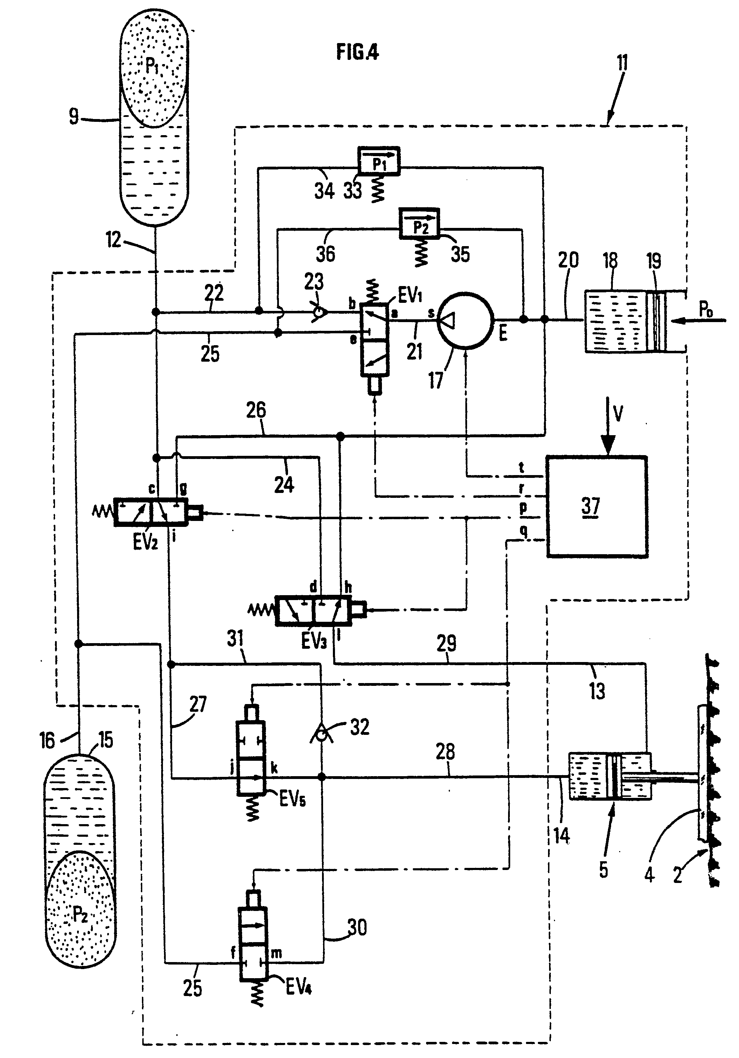

On actionne alors simultanément les électro-vannes EV2, EV3 (Fig. 4) de manière à mettre en communication les voies c et i d'une part et h et l d'autre part. Ceci se traduit par l'application de la pression P1 de l'accumulateur 9 aux chambres 8a des vérins et de la pression statique extérieure P0 inférieure à P1 aux chambres opposées 8b des mêmes vérins. La résultante des forces hydrauliques appliquée aux tiges 6 a pour effet d'écarter les patins 4 du corps 1 et de les plaquer contre les parois du puits.

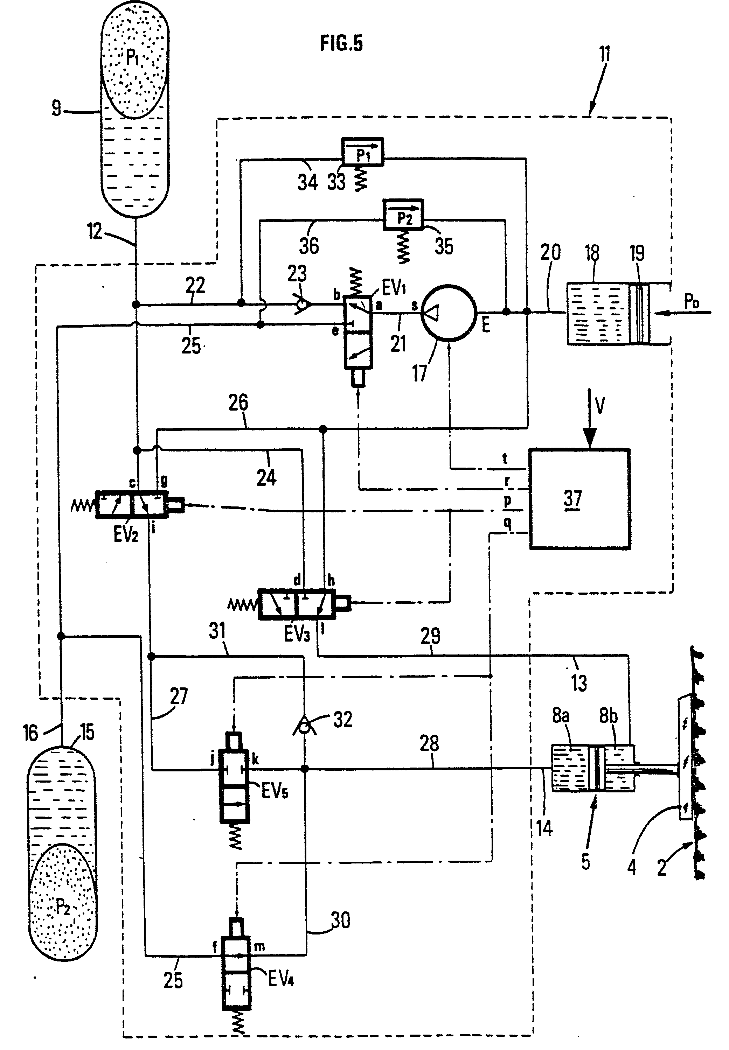

Les patins étant appliqués contre les parois, on déclenche les moyens d'application des contraintes radiales. Pour cela, on applique aux électro-vannes EV4, EV5 un signal de commande intermittent par la ligne q, de manière à mettre en communication les voies f, m et isoler l'une de l'autre les voies j, k pendant un instant relativement bref (Fig. 5). La canalisation 28 et par conséquent la chambre 8a des vérins d'ancrage 5 se trouvant mises, par l'intermédiaire de la canalisation 25, en communication avec l'accumulateur auxiliaire 15 chargé à une pression P2 beaucoup plus élevée que la pression d'ancrage P1, une surpression très forte et de courte durée est appliquée aux vérins 5 et par conséquent aux patins d'ancrage 4. Il en résulte qu'une impulsion sismique radiale très étroite est transmise aux formations environnantes.

Le cycle de déclenchement peut être effectué plusieurs fois à un même emplacement. Les enregistrements sismiques correspondant respectivement aux différentes impulsions émises sont alors sommés pour obtenir un enregistrement amélioré.

Le retrait des patins 4 permettant le déplacement du dispositif le long du puits, est ensuite effectué en ramenant les électro-vannes EV2, EV3 en position de repos (Fig. 3).

Dans le mode de réalisation décrit, les moyens d'application de contraintes radiales sont constitués d'un système hydraulique auxiliaire comportant un accumulateur et des électro-vannes connectés au système hydraulique d'ancrage. Mais on ne sortirait pas du cadre de l'invention en remplaçant le système hydraulique auxiliaire par tout moyen équivalent capable d'appliquer des contraintes radiales à des patins déjà ancrés contre la paroi du puits.

**Revendications**

1. Dispositif pour appliquer des impulsions sismiques brèves à la paroi d'un puits ou forage comportant un corps allongé (1) adapté à être descendu dans le puits à l'extrémité d'un câble électro-porteur (3) incluant des conducteurs d'alimentation électrique et de transmission de signaux, des moyens d'ancrage déplaçables pouvant être appliqués contre la paroi du puits et immobiliser le corps, des vérins de manoeuvre disposés transversalement, un système hydraulique contenu dans le corps et comportant une pompe pour un fluide hydraulique alimentée électriquement par l'intermédiaire du câble électro-porteur, un premier et un second accumulateurs hydrauliques et des moyens de commande, caractérisé en ce qu'il comporte au moins un patin (4) de longueur voisine de celle du corps et relié auxdits vérins, des moyens d'équilibrage de la pression statique pour maintenir la pression la plus basse du système hydraulique à une valeur sensiblement égale à la pression hydrostatique régnant dans le puits à l'extérieur du corps, des circuits de connexion et une première électro-vanne (EV1) pour mettre la pompe alternativement en communication avec les deux accumulateurs hydrauliques, un premier moyen et un second moyen de régulation pour limiter les écarts entre les pressions de charge respectives du premier et du second accumulateurs, par rapport à la pression hydrostatique à des valeurs positives $\Delta p1$ et $\Delta p2$ avec $\Delta p2 > \Delta p1$, et des moyens de contrôle incluant des électro-vannes (EV2-EV5) pour commander successivement la connexion du premier accumulateur (9) aux vérins de chaque patin, de manière à provoquer le déplacement et l'ancrage de ceux-ci contre les parois du puits, et la connexion pendant un bref intervalle de temps du second accumulateur aux mêmes vérins de manière à communiquer auxdits patins une force impulsionnelle de courte durée.

2. Dispositif selon la revendication 1, caractérisé en ce que les moyens d'équilibrage comportent un cylindre d'équilibrage (18) fermé par un piston libre (19) soumis extérieurement à la pres-

sion hydrostatique et les moyens de limitation comportent des soupapes tarées (33, 35).

3. Dispositif selon la revendication 2, caractérisé en ce que les moyens de contrôle comportent une seconde électro-vanne (EV2) et une troisième électro-vanne (EV3), la seconde électro-vanne étant associée en série avec une quatrième électro-vanne (EV4) ouverte en position de repos.

4. Dispositif selon la revendication 3, caractérisé en ce que les moyens pour appliquer le fluide délivré par le second accumulateur (15) comportent une cinquième électro-vanne (EV5) fermée en position de repos, cette électro-vanne étant disposée sur une portion de circuit reliant le second accumulateur (15) aux vérins de manoeuvre (5).

5. Dispositif selon la revendication 1, caractérisé en ce qu'il comporte plusieurs patins d'ancrage disposés à la périphérie du corps de la sonde, chacun d'eux étant relié à des vérins de manoeuvre.

**Claims**

1. Device for applying brief seismic pulses to the wall of a bore hole or a well hole, comprising an elongated body (1) suitable to be lowered into the bore hole at the end of a supporting electrical cable (3) which includes conductors for the electrical supply and the transmission of signals, a means of anchorage which can be displaced and which may be applied against the wall of the bore hole in order to immobilise the body, actuators arranged transversely, an hydraulic system contained within the body and comprising a pump for an hydraulic fluid and the electrical supply being provided by means of the supporting electrical cable, a first hydraulic accumulator and a second hydraulic accumulator and the means of control, characterised in that it comprises at least one pad (4) with a length similar to that of the body and connected to the said actuators, a means for stabilising the static pressure in order to maintain the lowest pressure in the hydraulic system at a value which is basically equal to the hydrostatic pressure existing in the bore hole and external to the body, connection circuits and a first electrovalve (EV1) which alternately connects the pump with the two hydraulic accumulators, a first method and a second method of regulation to limit the differences between the respective charge pressures for the first and the second accumulators, relative to the hydrostatic pressure, at positive values Δp1 and Δp2 where Δp2 > Δp1 and a means of control which includes the electrovalves (EV2-EV5) to successively control the connection of the first accumulator 9 to the actuators for each pad in order to displace these and anchor them against the walls of the bore hole, together with the connection, for a brief time period, of the second accumulator to the same actuators in order to apply a pulsating force of short duration to the said pads.

2. Device in accordance with claim 1, characterised in that the means of stabilisation comprises a stabilising cylinder (18) closed by a freely sliding piston (19) subjected externally to the hydrostatic pressure, the means of limiting the pressure comprising calibrated valves (33, 35).

3. Device in accordance with claim 2, characterised in that the means of control comprises a second electrovalve (EV2) and a third electrovalve (EV3), the second electrovalve being connected in series with a fourth electrovalve (EV4) which is open in the rest position.

4. Device in accordance with claim 3, characterised in that the means used to apply the fluid delivered by the second accumulator (15) comprises a fifth electrovalve (EV5) closed in the rest position, this electrovalve being installed in a portion of the circuit connecting the second accumulator (15) to the actuators (5).

5. Device in accordance with claim 1, characterised in that it comprises several anchoring pads arranged over the periphery of the probe body, each of these being connected to actuators.

**Patentansprüche**

1. Vorrichtung zur Anlegung seismischer kurzer Impulse an die Wandung eines Bohrlochs oder einer Bohrung, mit einem länglichen Körper (1) derartiger Ausbildung, daß er in das Bohrloch am Ende eines Elektro-Trägerkabels (3) hinabgelassen werden kann und Leiter für elektrische Speisung und Signalübertragung umfaßt, verschiebbare Verankerungseinrichtungen, die gegen die Wand des Bohrlochs gedrückt werden und den Körper festlegen können, transversal angeordnete Betätigungsstellzylinder, ein hydraulisches im Körper enthaltenes System mit einer Pumpe für ein hydraulisches Fluid, die elektrisch über ein Elektroträgerkabel gespeist ist, erste und zweite hydraulische Sammler sowie Steuereinrichtungen, gekennzeichnet durch wenigstens einen Schuh (4) einer Länge benachbart der des Körpers, der mit diesen Stellzylindern verbunden ist, Einrichtungen zum Ausgleich des statischen Drucks, um den niedrigsten Druck des hydraulischen Systems auf einem Wert zu halten, der im wesentlichen gleich dem hydrostatischen im Bohrloch außerhalb des Körpers herrschenden ist, Verbindungskreise und ein erstes Magnetventil (EV1), das die Pumpe alternativ in Verbindung mit den beiden hydraulischen Sammlern setzt, eine erste und eine zweite Steuereinrichtung zur Begrenzung der Abweichungen zwischen den Beaufschlagungsdrücken des ersten bzw. zweiten Sammlers, bezogen auf den hydrostatischen Druck, auf positive Werte Δp1 und Δp2, wobei Δp2 > Δp1 und Regeleinrichtungen mit Magnetventilen (EV2-EV5), um aufeinanderfolgend die Verbindung des ersten Sammlers (9) mit den Stellzylindern des Schuhs derart zu steuern, daß deren Verschiebung und Verankerung gegen die Bohrlochwandungen sowie die Verbindung während eines kurzen Zeitintervalls des zweiten Sammlers mit den gleichen Stellzylindern derart hervorgerufen wird, daß diesen Schuhen eine Impulskraft kurzer Dauer erteilt wird.

2. Vorrichtung nach Anspruch 1, dadurch gekennzeichnet, daß die Ausgleichseinrichtungen einen Ausgleichszylinder (18) aufweisen, der durch einen freien Kolben (19) geschlossen wird, welcher außen dem hydrostatischen Druck ausgesetzt ist ; und daß die Begrenzereinrichtungen tarierte Ventile (33, 35) umfassen.

3. Vorrichtung nach Anspruch 2, dadurch gekennzeichnet, daß die Regeleinrichtungen ein zweites Magnetventil (EV2) und ein drittes Magnetventil (EV3) umfassen, wobei das zweite Magnetventil in Reihe einem vierten Magnetventil (EV4) zugeordnet ist, welches in Ruhestellung offen ist.

4. Vorrichtung nach Anspruch 3, dadurch gekennzeichnet, daß die Einrichtungen, die das vom zweiten Sammler (15) gelieferte Fluid zur Beaufschlagung bringen, ein fünftes in Ruhestellung geschlossenes Magnetventil (EV5) umfassen, wobei dieses Magnetventil auf einem Teil des den Sammler (15) mit den Betätigungsstellzylindern (5) verbindenden Kreises angeordnet ist.

5. Vorrichtung nach Anspruch 1, dadurch gekennzeichnet, daß sie mehrere Verankerungsschuhe umfaßt, die am Umfang des Sondenkörpers angeordnet sind, wobei jeder hiervon mit Betätigungszylindern verbunden ist.

EP 0 162 767 B1

FIG.1

FIG.2

**FIG.3**

**FIG.4**

FIG.5